# EUROPEAN PATENT APPLICATION

(11) **EP 4 009 306 A1**
(43) Date of publication of application: **08.06.2022**
(21) Application number: 19940366.8
(22) Date of filing: 02.08.2019
(51) Int. Cl.: G09B 23/28

(54) **MITRAL VALVE MODEL AND FIXING JIG**

(71) Applicant: Fasotec Co., Ltd., Chiba-shi, Chiba 261-8501 (JP)
(72) Inventor: TAKEUCHI, Junichi, Chiba-shi, Chiba 261-8501 (JP); ANRAKU, Takeshi, Chiba-shi, Chiba 261-8501 (JP)
(74) Representative: Casalonga
(86) International application number: PCT/JP2019/030562
(87) International publication number: WO 2021/024320

(57) **Abstract**

Provided are a mitral valve model and a fixing jig which enable effective and low-cost training in mitral valvuloplasty or mitral valve replacement, and which can be easily handled and have a high level of convenience. This mitral valve model is for training of an endoscopic procedure in mitral valvuloplasty or mitral valve replacement, wherein the mitral valve model is obtained by reproducing or deforming the organ texture of the heart and comprises a left atrium part, a mitral valve part, and a left ventricle part, and the mitral valve part is not visible outside the mitral valve model and is covered by the left atrium part.

## Description

### [Technical Field]

This present invention relates to an organ model for training in mitral valvuloplasty or mitral valve replacement.

### [Background Art]

Generally, angina pectoris, myocardial infarction, and the like are known as heart diseases. Among heart diseases, the estimated number of patients with valvular heart disease is as high as 2 million or more, and it is said that the number is increasing year by year. Of the patients with valvular heart disease, about 10,000 patients undergo surgery annually.

One of the most common valvular heart diseases is mitral insufficiency. Mitral insufficiency is a condition in which the closing function of the mitral valve deteriorates and some of the blood that should be sent from the left ventricle to the aorta flows back into the left atrium and is also called mitral regurgitation.

The causes of mitral insufficiency include deviation of the valve cusp, rupture of the tendon, and enlargement of the annulus. Treatment methods for mitral insufficiency include internal treatment to relieve or suppress the progress of symptoms and surgical treatment. Surgical treatment includes mitral valve replacement that replaces the valve with an artificial valve and mitral valvuloplasty that controls regurgitation by repairing the patient's valve. Mitral valvuloplasty has the advantage that the function of the heart is easily preserved because it repairs the patient's valve. Mitral valvuloplasty also has the advantage that there is no blood coagulation around the valve and there is no need to take an anticoagulant for the rest of the life as in the case of using a mechanical valve in the mitral valve replacement. However, mitral valvuloplasty has the problem that it is more difficult than mitral valve replacement.

In particular, in recent years, complete endoscopic surgery using a surgery support robot and Minimally Invasive Cardiac Surgery called MICS (minimally invasive cardiac surgery) are often performed. These minimally invasive surgeries have the advantage that it is easy to observe the insufficiency of closure because the surgeries not only place less strain on the patient's body than median sternotomy which opens the chest significantly but also can approach the mitral valve from the right side of the patient's body. However, since these minimally invasive surgeries require high technical skills and experience of physicians, it is strongly desired that physicians gain a large amount of experience and improve their technical skills.

Therefore, in recent years, a simulator that can reproduce the shape and the texture of a human body and simulate the surgical environment for the human body has been developed for training and learning of the thoracoscopic surgery (for example, refer to Patent Document 1).

A thoracic cavity simulator disclosed in Patent Document 1 is a device including a human skeleton model simulating at least the ribs, and a casing for storing the human skeleton model, in which an opening is provided in a rib part of the casing so that a diaphragm part can be opened and closed, and an organ model can be stored inside the ribs of the human skeleton model.

According to this configuration, it is possible to effectively perform training of the procedure of approaching the mitral valve from between the ribs of the right chest of the patient.

However, the artificial organ model used for training generally has a problem that the manufacturing cost is high. Therefore, there is known a heart model that is manufactured by injecting and curing a liquid resin using an outer mold and a core that can be divided into a plurality of parts (refer to Patent Document 2). According to the heart model disclosed in Patent Document 2, the organ model can be mass-produced at a low cost because the core as well as the outer mold used for manufacturing can be divided and reused unlike the conventional technique in which the core is crushed and discarded.

However, the heart model disclosed in Patent Document 2 has a problem that the cost cannot be sufficiently reduced because it tries to accurately reproduce the shape of a portion that is not particularly necessary in actual surgery.

Further, as a method of attaching the organ model to the simulator of Patent Document 1, for example, a grasping member provided with an engaging part is used.

Generally, in the case of the procedure of approaching the mitral valve from between the ribs of the right chest of the patient, the endoscope is generally inserted and accessed from the fourth intercostal space. However, if the attachment position of the organ model is fixed in one place and does not change, some operators may feel uncomfortable in the surgical field of view as seen from the access position. However, the thoracic cavity simulator disclosed in Patent Document 1 has a problem that a device or a mechanism for adjusting the attachment position of the organ model is not sufficiently disclosed.

### [Prior Art]

### [Patent Document]

[Patent Document 1] WO 2015/151503 A1
[Patent Document 2] JP 2017-217856 A

### [Outline of the Invention]

### [Problems to be Solved by the Invention]

In view of the above circumstances, it is an object of the present invention to provide a mitral valve model and a fixing jig which enable effective and low-cost training in mitral valvuloplasty or mitral valve replacement, and which can be easily handled and have a high level of convenience.

### [Means to Solve the Objects]

In order to solve the above-mentioned problems, the mitral valve model of the present invention is a mitral valve model for training of an endoscopic procedure in mitral valvuloplasty or mitral valve replacement, the mitral valve model being obtained by reproducing or deforming the organ texture of the heart, the mitral valve model comprising: a left atrium part, a mitral valve part, and a left ventricle part, wherein the mitral valve part is not visible outside the mitral valve model and is covered by the left atrium part.

Since the mitral valve is not visible from the outside and is covered by the left atrium part, it is possible to make an incision in the left atrium wall of the left atrium part and then excise the valve cusp, thus enabling more realistic training of procedures.

In the mitral valve model of the present invention, it is preferable that the left atrium part and the left ventricle part are both hollow, and are in at least any one of the following states (1) to (3).
(1) The valve cusp provided to the mitral valve part is in a deviant state.
(2) The tendon connecting the valve cusp provided to the mitral valve part and the tip of the papillary muscle provided to the left ventricle part are in a rupture state.
(3) The distance between the valve cusp provided to the mitral valve part and the tip of the papillary muscle is 3 to 7 mm.

Regarding (1) above, the deviant state may be provided in the anterior cusp or the posterior cusp. Further, the deviant state is used in the sense that not only the deviant in a narrow sense but also the hypertrophy of the valve cusp is included. Regarding (2) above, it is preferable that the tip of the papillary muscle is formed round in order to more realistically reproduce the rupture state of the tendon. The more preferable distance in (3) between the valve cusp and the tip of the papillary muscle is 5 mm.

In the mitral valve model of the present invention, it is preferable that the surface layer of the left atrium part is obtained by reproducing or deforming the hardness and thickness of the heart organs, and the surface layer can be grasped and incised by a device used in the endoscopic procedure.

Since it is necessary to make an incision in the left atrium wall when performing training of the procedure for mitral valvuloplasty or mitral valve replacement, by reproducing the hardness and thickness, training such as grasping and incision of organs can be performed more realistically. In addition, by deforming the hardness or thickness of the parts that are not closely related to the procedure such as grasping and incision, the model can be manufactured at a low cost.

In the mitral valve model of the present invention, it is preferable that the shape of the left atrium part is a substantially spherical segment shape deformed based on a scope image in an actual endoscopic procedure. By roughly deforming the shape of the left atrium part instead of exactly reproducing the shape of the left atrium part, it is possible to make the scope image when viewed with an endoscope closer to the actual surgical image.

In the mitral valve model of the present invention, it is preferable that the texture is deformed such that a material constituting the left atrium part contains fine bubbles. Since fine bubbles are contained, the left atrium part is less slippery when grasped with forceps or the like, and is easily grasped due to high flexibility. Further, the mitral valve part may be made of a material that contains fibers so that the strength is increased in order to perform the procedure of stretching and suturing the cut surface after excising a lesion.

In the mitral valve model of the present invention, it is preferable that the texture is deformed such that a material constituting the left ventricle part does not contain fine bubbles or fibers. Since the parts that are not closely related to the procedure such as grasping and incision do not contain fine bubbles or fibers, it is possible to manufacture the model at a low cost.

In the mitral valve model of the present invention, it is preferable that an attachment mechanism is provided below the left ventricle part for attaching a fixing jig for fixing an organ to the thoracic cavity simulator. Since the attachment mechanism is provided in the mitral valve model itself, it becomes easy to attach the model to the fixing jig and the convenience is improved. Examples of the attachment mechanism include through-holes, recesses, and protrusions.

The mitral valve model fixing jig of the present invention is a fixing jig for attaching and fixing the above-described mitral valve model, the fixing jig including a pedestal part provided with an attachment mechanism for engaging with a spinal region inside a thoracic cavity simulator, and a fixing part for fixing the mitral valve model, wherein the fixing part includes a mechanism capable of finely adjusting the position of the pedestal part by allowing the spinal region to slide in a longitudinal direction thereof from a position at which the pedestal part is slid onto the spinal region and fixed in a state where the mitral valve model is attached and fixed.

It is preferable that the engagement mechanism for engaging with the spinal region inside the thoracic cavity simulator is a convex or concave engaging part, and the convex or concave engaging part engages with a concave or convex engaging part provided in the spinal region inside the thoracic cavity simulator.

It is preferable that the mitral valve model is attached using an attachment mechanism provided in the mitral valve model, and the model includes a mechanism capable of fixing the model so that the mitral valve model does not fall off from the fixing jig during training.

In the mitral valve model fixing jig of the present invention, the fixing part includes a rotary table mechanism capable of finely adjusting an outward direction of the front of the left atrium part of the mitral valve model between a longitudinal direction of the spinal region toward the head and a direction orthogonal to the longitudinal direction, the direction being on the right-hand side from the center of the thoracic cavity simulator.

When actually approaching the mitral valve from the right side of the patient and performing mitral valvuloplasty or mitral valve replacement, surgeries are performed while changing the position and orientation of the patient's heart so that the mitral valve can be observed with an endoscope. Therefore, by providing a rotary table mechanism capable of finely adjusting the orientation of the mitral valve model within a range of 90° from the head side of the patient to the right side, a surgical field of view closer to the actual surgery can be obtained.

### [Effects of the Invention]

According to the mitral valve model and the fixing jig of the present invention, it becomes the mitral valve model and the fixing jig which enable effective and low-cost training in mitral valvuloplasty or mitral valve replacement, and which can be easily handled and have a high level of convenience.

### [Brief Description of the Drawings]

[Fig. 1] Fig. 1 shows a perspective view 1 of the mitral valve model of Embodiment 1.
[Fig. 2] Fig. 2 shows an external view 1 of the mitral valve model of Embodiment 1.
[Fig. 3] Fig. 3 shows an external view 2 of the mitral valve model of Embodiment 1.
[Fig. 4] Fig. 4 shows an external view 3 of the mitral valve model of Embodiment 1.
[Fig. 5] Fig. 5 (1) shows a left side view of the mitral valve model, and Fig. 5 (2) shows a cross-sectional view taken along the line A-A in Fig. 5 (1).
[Fig. 6] Fig. 6 (1) shows a left side view of the mitral valve model, and Fig. 6 (2) shows a cross-sectional view taken along the line B-B in Fig. 6 (1).
[Fig. 7] Fig. 7 (1) shows a front view of the mitral valve model, and Fig. 7 (2) shows a cross-sectional view taken along the line C-C in Fig. 7(1).
[Fig. 8] Fig. 8 shows a perspective view of the mitral valve model fixing jig of Embodiment 1.
[Fig. 9] Fig. 9 shows an external view 1 of the mitral valve model fixing jig of Embodiment 1.
[Fig. 10] Fig. 10 shows an external view 2 of the mitral valve model fixing jig of Embodiment 1.
[Fig. 11] Fig. 11 shows an external view 3 of the mitral valve model fixing jig of Embodiment 1.
[Fig. 12] Fig. 12 shows an external view of the mitral valve model fixing jig of the first embodiment in a stopper open state, in which Fig. 12 (1) shows a perspective view from the front side, and Fig. 12 (2) shows a perspective view from the back side.
[Fig. 13] Fig. 13 shows a front view of the mitral valve model fixing jig of the first embodiment in the stopper open state.
[Fig. 14] Fig. 14 shows an external view of the mitral valve model when it is attached to the mitral valve model fixing jig, in which Fig. 14 (1) shows a perspective view from the front side and Fig. 14 (2) shows a perspective view from the back side.
[Fig. 15] Fig. 15 shows a front view of the mitral valve model when it is attached to the mitral valve model fixing jig.
[Fig. 16] Fig. 16 shows an external view of the mitral valve model when it is fixed to the mitral valve model fixing jig, in which Fig. 16 (1) shows a perspective view from the front side and Fig. 16 (2) shows a perspective view from the back side.
[Fig. 17] Fig. 17 shows a front view of the model when it is fixed to the mitral valve model fixing jig.
[Fig. 18] Fig. 18 shows an image diagram of attachment of the mitral valve model fixing jig to the thoracic cavity simulator.
[Fig. 19] Fig. 19 shows an explanatory view when the mitral valve model fixing jig is attached to the thoracic cavity simulator, and shows a state in which the thoracic cavity simulator 8 is viewed from the right side.
[Fig. 20] FIG. 20 shows an explanatory view of the slide mechanism of the mitral valve model fixing jig, Fig. 20 (1) shows a view in which the thoracic cavity simulator is slid upward, and Fig. 20 (2) shows a view in which the thoracic cavity simulator is slid downward.
[Fig. 21] Fig. 21 shows a usage flow chart of the mitral valve model and the mitral valve model fixing jig.
[Fig. 22] Fig. 22 shows a flow chart of the surgical training of mitral valvuloplasty.

### [Best Mode for Carrying Out the Invention]

Embodiments of the present invention will be described in detail below with reference to the drawings. The present invention is not limited to the following embodiment and examples of shown in the figure, and the present invention can be variously changed in design.

### [Embodiment 1]

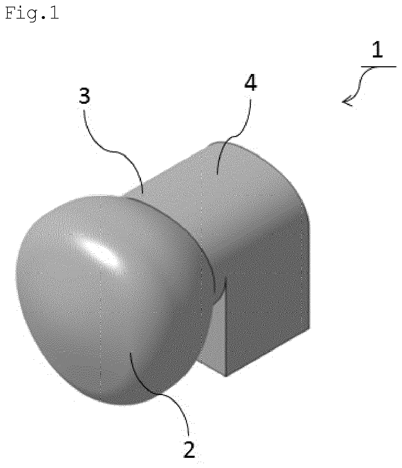

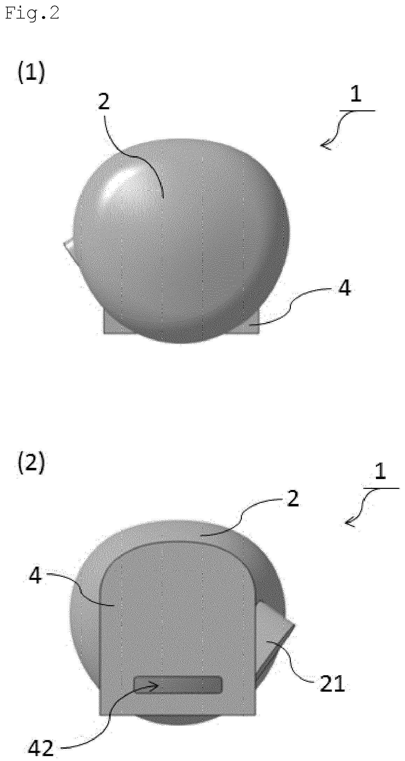

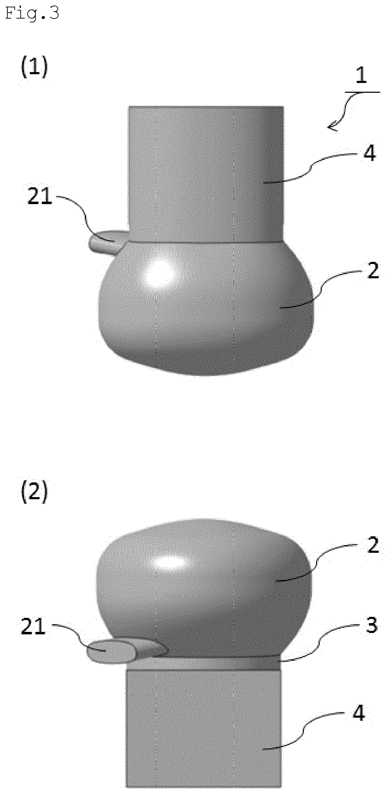

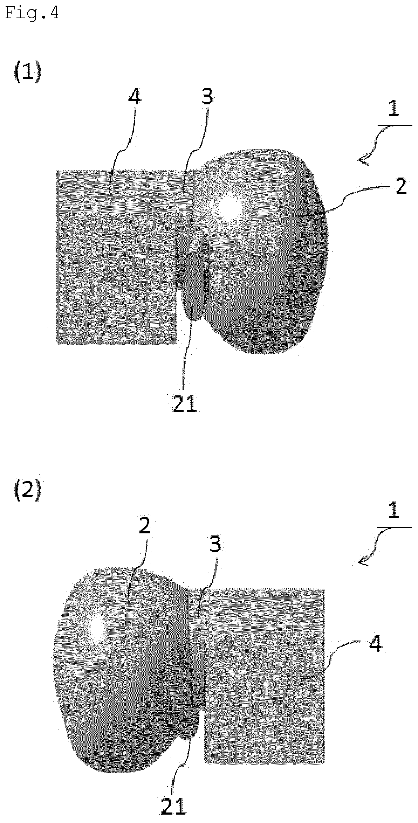

Fig. 1 shows a perspective view 1 of the mitral valve model of Embodiment 1. Fig. 2 to 4 show external views of the mitral valve model of Embodiment 1, Fig. 2 (1) is a front view, and Fig. 2 (2) is a rear view, and Fig. 3 (1) is a plan view, and Fig. 3 (2) is a bottom view, and Fig. 4 (1) is a left side view, and Fig. 4 (2) is a right side view.

As shown in Fig. 1, a mitral valve model 1 includes a left atrium part 2, a mitral valve part 3 and a left ventricle part 4. The mitral valve model 1 is obtained by reproducing or deforming the flat shape of the heart in a state where an artificial heart-lung machine pump is attached to the patient, blood is drawn from the heart, and gas is injected to apply pressure by an endoscopic procedure. In particular, the mitral valve model 1 realistically reproduces the shape when viewed from the scope of the endoscope. The left atrium part 2, the mitral valve part 3, and the left ventricle part 4 are molded separately and then bonded to form the mitral valve model 1, but they may be integrally molded.

As shown in Fig. 2(1), the appearance of the left atrium part 2 has a rounded shape based on an inverted triangle with rounded corners when viewed from the front, and is substantially circular in shape. Further, as shown in Figs. 1 to 4, the overall shape is a substantially spherical segment shape, and the left atrium part 2 is connected to the mitral valve part 2. As shown in Fig. 4(1), a left atrial appendage 21 is provided in the left atrium part 2. Generally, at the time of heart surgery such as mitral valvuloplasty, left atrial appendage occlusion is performed at the same time to reduce the risk of thromboembolism. Therefore, by providing the left atrial appendage 21, it is possible to perform the training of the procedure for the left atrial appendage occlusion at the same time.

As shown in Fig. 2(2), Fig. 3 or Fig. 4, the appearance of the left ventricle part 4 has a substantially rectangular parallelepiped shape and the left ventricle part 4 is connected to the mitral valve part 2. As shown in Fig. 2(2), the upper end of the left ventricle part 4 is formed with rounded corners, whereby the left ventricle wall is reproduced as will be described later. A through-hole 42 is formed in the lower part of the left ventricle part 4, and the left ventricle part 4 can be easily attached to a mitral valve fixing jig 5 described later. Further, in order to facilitate attachment of the mitral valve model 1 to the mitral valve fixing jig 5, the lower end of the left ventricle part 4 has a flat shape as shown in Fig. 2 or Fig. 4.

The mitral valve part 3 is not visible in appearance and is covered by the left atrium part 2. Therefore, since the mitral valve part 3 appears when the left atrium part 2 is incised during training, more realistic training is possible.

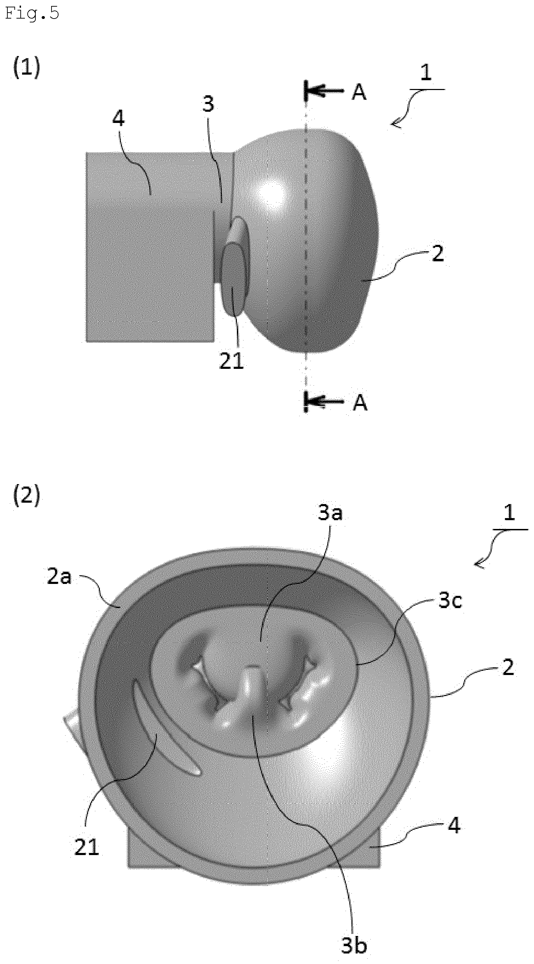

Next, the internal structure of the mitral valve model 1 will be described. Fig. 5(1) is a left side view of the mitral valve model, and Fig. 5(2) shows a cross-sectional view taken along the line A-A in Fig. 5(1). As shown in Fig. 5(2), the left atrium part 2 is formed by the left atrium wall 2a, and the left atrial appendage 21 is provided at the lower left position in the front view. The mitral valve part 3 includes an anterior cusp 3a, a posterior cusp 3b, and an annulus 3c, and the left atrium part 2 is connected to the mitral valve part 3 at the position of the annulus 3c. The mitral valve part 3 is not a reproduction of the mitral valve of a normal human body, but is a representation of an example of a lesion of mitral insufficiency in which the center of the posterior cusp 3b of the valve cusp is in a deviant state. Here, the center of the posterior cusp 3b is in a deviant state, but the lesion is not limited to such a position. For example, the anterior cusp 3a may be in a deviant state, and the left and right sides of the posterior cusp 3b may be in a deviant state. By changing the position of the lesion, training of various variations is possible.

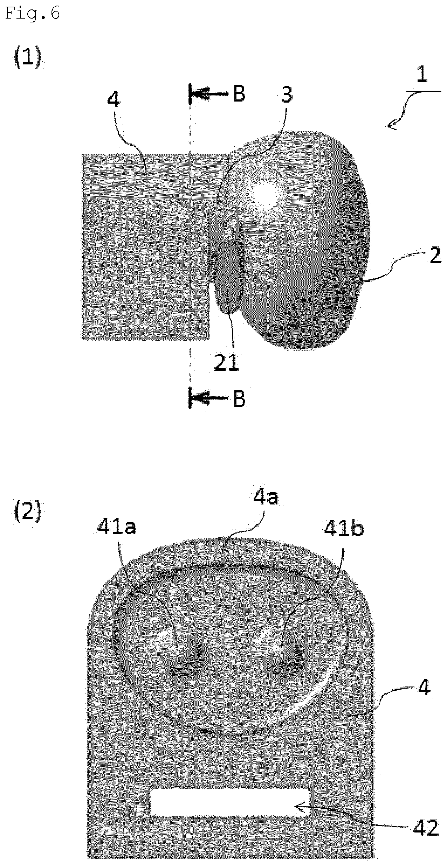

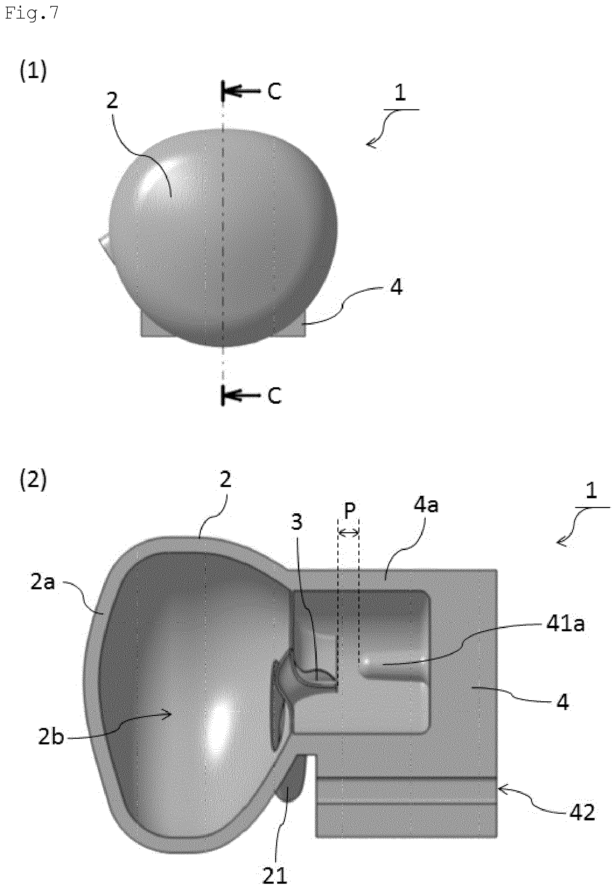

Fig. 6(1) is a left side view of the mitral valve model, and Fig. 6(2) shows a cross-sectional view taken along the line B-B in Fig. 6(1). Further, Fig. 7(1) is a front view of the mitral valve model, and Fig. 7(2) shows a cross-sectional view taken along the line C-C in Fig. 7(1).

As shown in Fig. 6(2) or Fig. 7(2), the left ventricular portion 4 is surrounded by the left ventricular wall 4a, the inside is hollow, and the papillary muscles (41a, 41b) are provided therein. No tendon is provided at the tips of the papillary muscles (41a, 41b), and the state in which the tendon is ruptured is reproduced. The distance P between the mitral valve part 3 and the papillary muscle 41a shown in Fig. 7(2) is 5 mm. This distance is a realistic reproduction of the distance between the mitral valve and the papillary muscle during actual surgery. Further, the tips of the papillary muscles (41a, 41b) are formed in a round shape, and in this respect, the actual shape of the papillary muscles is realistically reproduced.

As shown in Fig. 7(2), the internal space of the left atrium part 2 is provided wide, whereby the same as the state in which the annulus 3c is threaded after the left atrium wall 2a is incised during the training of the procedure can be reproduced.

Here, the material of the mitral valve model 1 will be described. First, since the left atrium part 2 needs to be incised in the left atrium wall 2a in order to perform mitral valvuloplasty or the like, the texture when the left atrium wall 2a is picked up with forceps or the like needs to be similar to that of the actual left atrium wall. Further, the mitral valve part 3 needs to be made of a material that can withstand suturing because it is necessary to stretch and suture the cut surface after cutting the valve cusp in the mitral valvuloplasty.

Therefore, the entire left ventricle part 4 including the left ventricle wall 4a is made of polyvinyl alcohol resin, but the left atrium wall 2a of the left atrium part 2 is made of a material containing fine bubbles (not shown) in the polyvinyl alcohol resin. Therefore, the material of the left atrium wall 2a is less slippery than the material of the left ventricle wall 4a and is more flexible, so that it is easy to pick up with forceps and has a texture similar to that of the actual left atrium wall.

Further, unlike the left ventricle wall 4a and the left atrium wall 2a, the mitral valve part 3 is made of a material containing fibers in polyvinyl alcohol resin, and has a strength that allows the cut surface to be stretched and sutured. The material of the mitral valve model 1 is not limited to the polyvinyl alcohol resin, and other resin materials having flexibility, elasticity, and the like may be used.

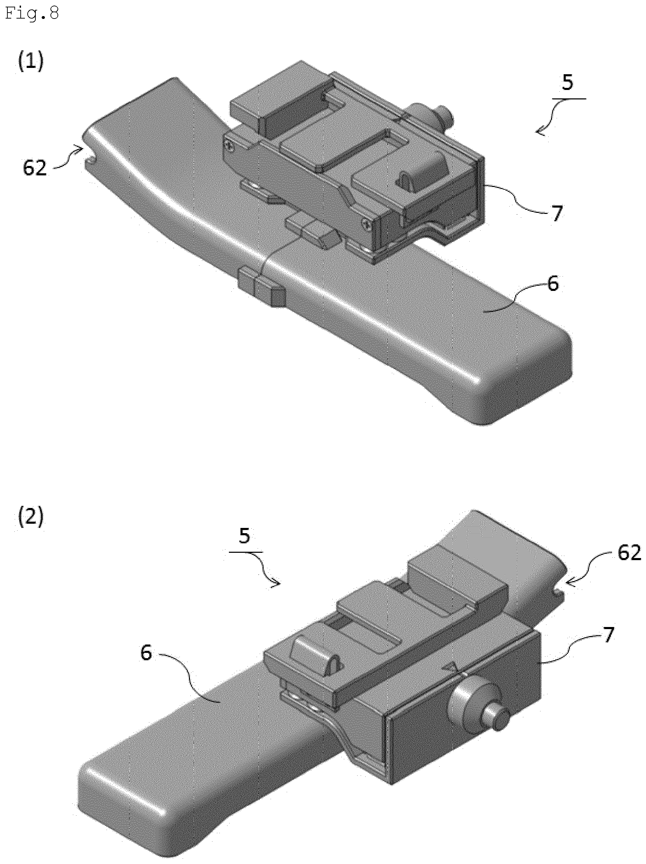

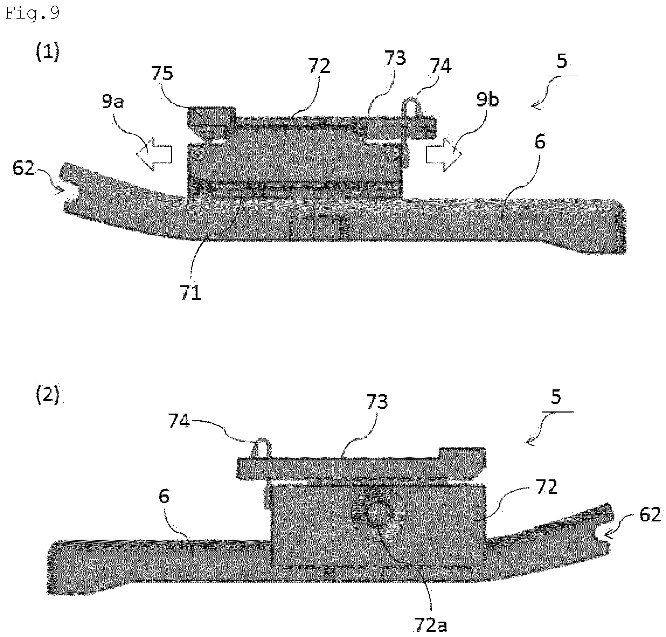

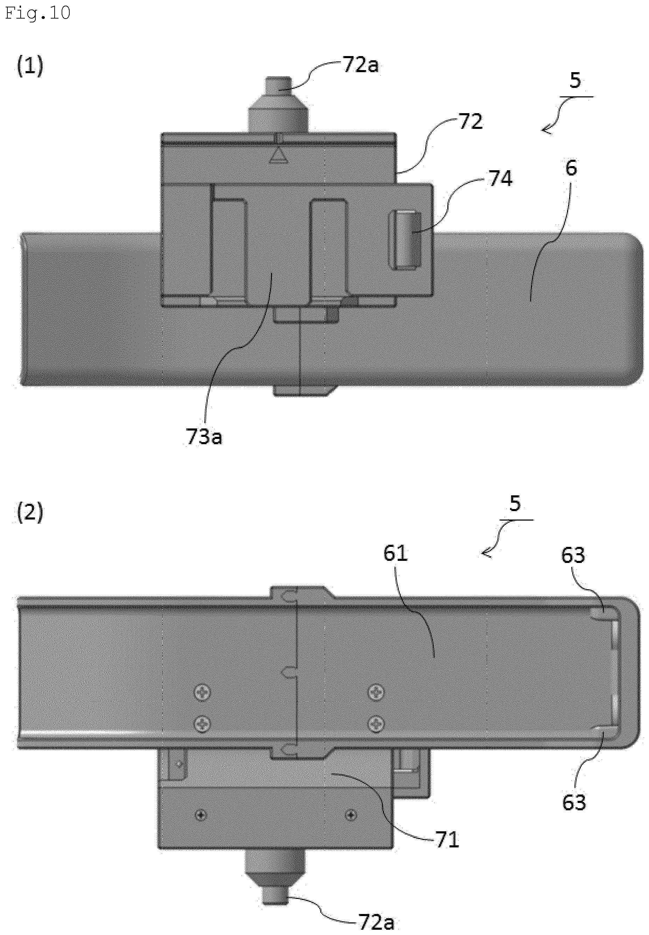

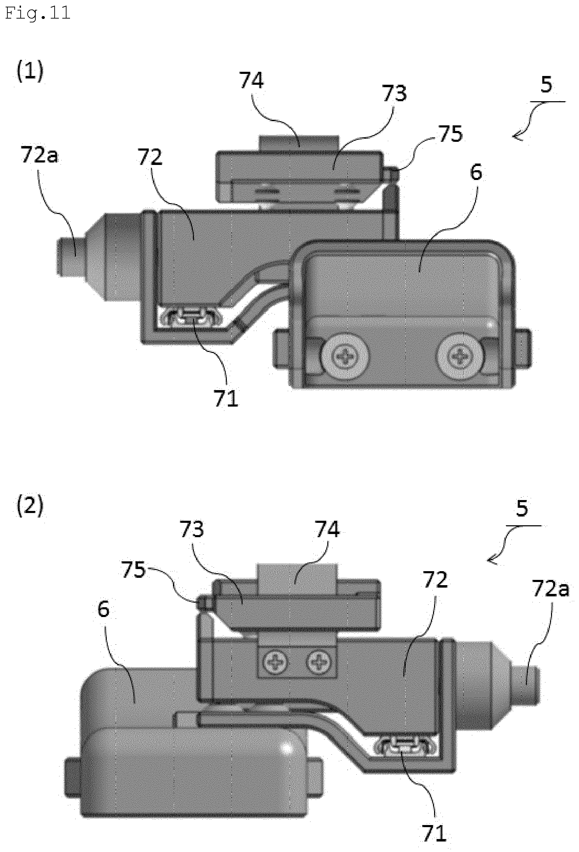

Next, the structure of the mitral valve model fixing jig of Embodiment 1 is described. Fig. 8 shows a perspective view 1 of the mitral valve model fixing jig of Embodiment 1, (1) shows a perspective view from the front side, and (2) shows a perspective view from the back side. And Fig. 9 to 11 show external views of the mitral valve model fixing jig of Embodiment 1, Fig. 9 (1) is a front view, and Fig. 9 (2) is a rear view, and Fig. 10 (1) is a plan view, and Fig. 10 (2) is a bottom view, and Fig. 11 (1) is a left side view, and Fig. 11 (2) is a right side view.

As shown in Figs. 8(1) and 8(2), the mitral valve model fixing jig 5 includes a pedestal part 6 and a fixing part 7. The pedestal part 6 includes a spine engagement mechanism for attaching the mitral valve model fixing jig 5 to a thoracic cavity simulator 8 described later. Specifically, a recess 61 shown in Fig. 10(2), a concave engaging part 62 shown in Figs. 8 and 9, and a convex engaging part 63 shown in Fig. 10(2) are provided.

The fixing part 7 includes a mechanism for attaching and fixing the mitral valve model 1 and adjusting the fixing position. That is, as shown in Fig. 9(1), the fixing part 7 includes a support portion 71, a slide portion 72, and a clip portion 73.

The support portion 71 and the slide portion 72 are fixed so as to be slidable by 25 mm in the directions indicated by arrows (9a, 9b). A button 72a is provided on the slide portion 72, and the fixed state of the support portion 71 and the slide portion 72 can be released. That is, normally, the support portion 71 and the slide portion 72 are fixed. However, when the slide portion 72 is slid while pressing the button 72a, the position of the slide portion 72 can be freely changed within a range of 25 mm in the directions indicated by the arrows (9a, 9b). When the pressed state of the button 72a is released in the state where the position adjustment is completed, the support portion 71 and the slide portion 72 are fixed again.

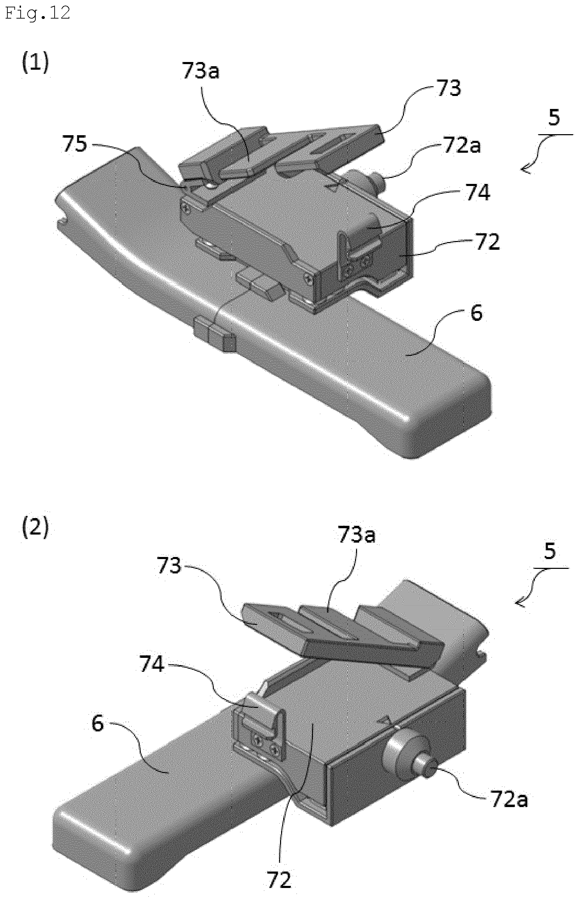

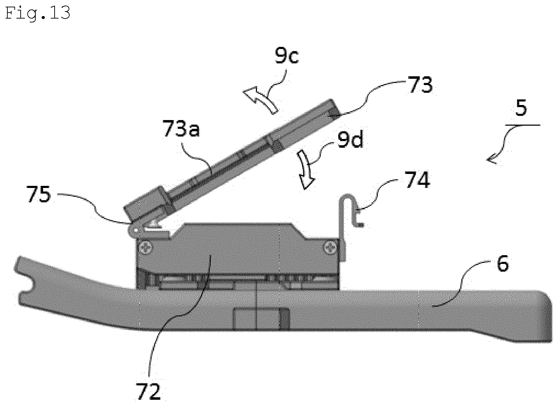

Fig. 12 is an external view of the mitral valve model fixing jig of the first embodiment in a stopper open state, in which Fig. 12(1) is a perspective view from the front side, and Fig. 12(2) is a perspective view from the back side. Further, Fig. 13 shows a front view of the mitral valve model fixing jig of the first embodiment in the stopper open state.

As shown in Fig. 13, the slide portion 72 and the clip portion 73 are connected via a hinge portion 75, and the clip portion 73 can be opened and closed from the slide portion 72 as indicated by arrows (9c, 9d) by operating a stopper 74. Further, as shown in Figs. 12(1) and 12(2), the clip portion 73 is provided with a plate-shaped protrusion 73a whereby a structure in which the mitral valve model 1 can be attached is realized.

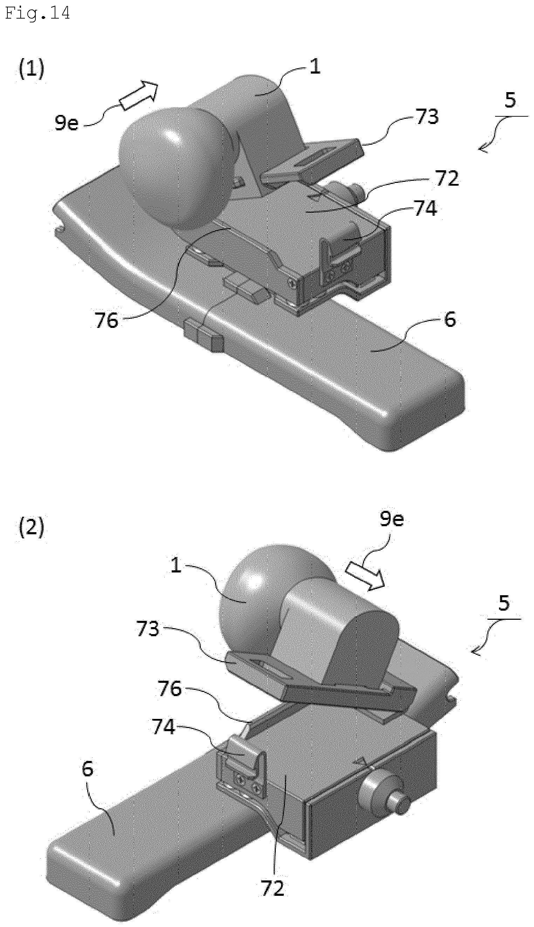

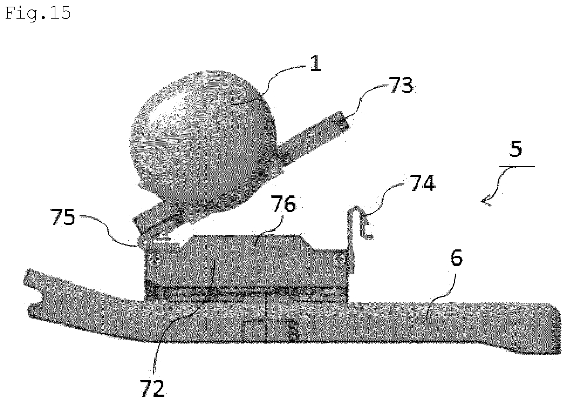

Fig. 14 is an external view of the mitral valve model when it is attached to the mitral valve model fixing jig, in which Fig. 14(1) is a perspective view from the front side and Fig. 14(2) is a perspective view from the back side. Further, Fig. 15 shows a front view of the mitral valve model when it is attached to the mitral valve model fixing jig.

As shown in Figs. 14(1) and 14(2), the mitral valve model 1 can be easily attached by fitting the through-hole 42 of the mitral valve model 1 into the protrusion 73a in the direction indicated by arrow 9e in a state where the clip portion 73 is open.

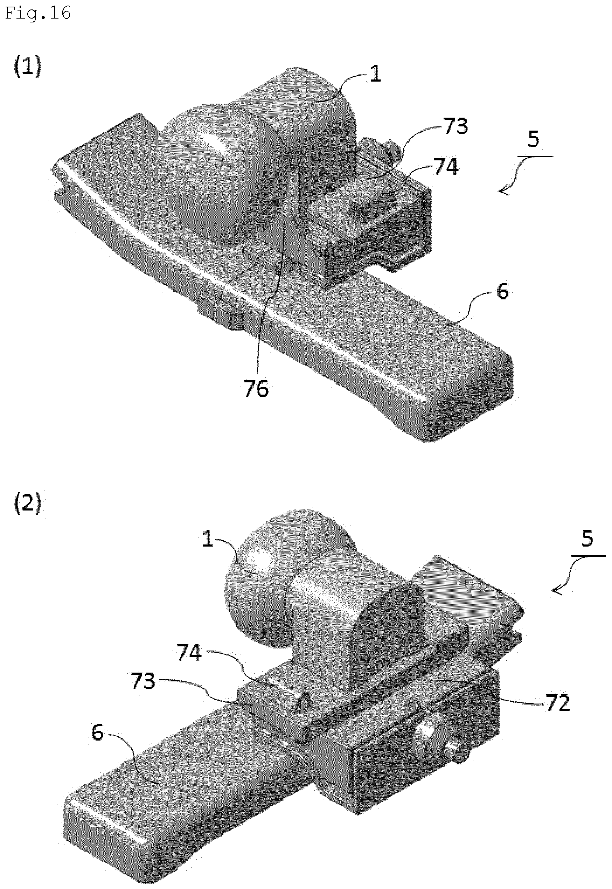

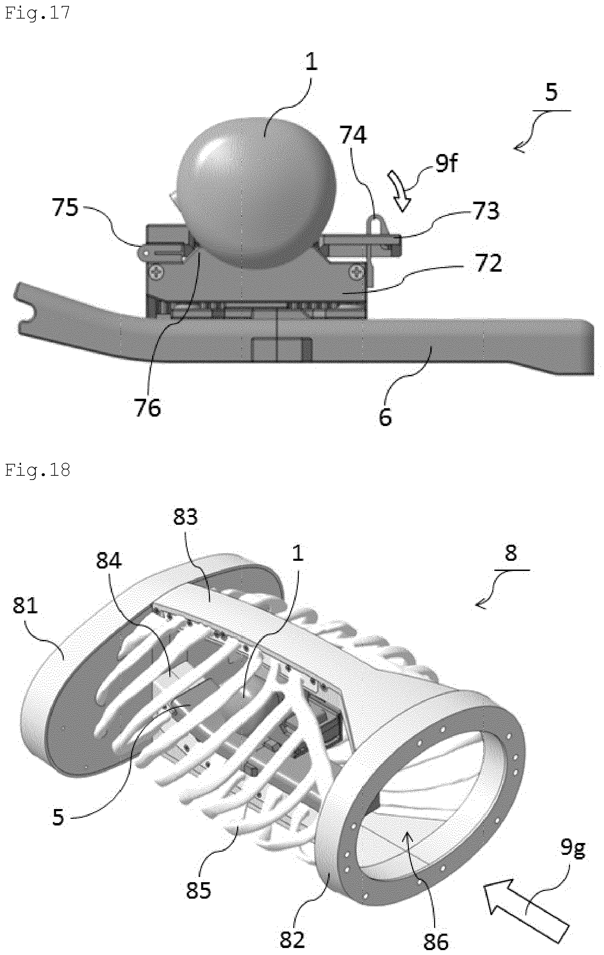

Fig. 16 is an external view of the mitral valve model when it is fixed to the mitral valve model fixing jig, in which Fig. 16(1) is a perspective view from the front side and Fig. 16(2) is a perspective view from the back side. Further, Fig. 17 shows a front view of the model when it is fixed to the mitral valve model fixing jig.

As shown in Fig. 17, the lower portion of the through-hole 42 of the mitral valve model 1 can be sandwiched between the clip portion 73 and the slide portion 72 by closing the clip portion 73 and fastening the stopper 74 in the direction indicated by arrow 9f. Thus, the mitral valve model 1 can be fixed stably. Further, as shown in Fig. 16(1) or Fig. 17, the slide portion 72 is provided with a wall portion 76. Thus, a structure is realized in which when the clip portion 73 is fixed by the stopper 74, the mitral valve model 1 does not fall out from the protrusion 73a even if the mitral valve model 1 is pulled with forceps or the like, for example.

Next, how to use the mitral valve model 1 and the mitral valve model fixing jig 5 will be described. Since the mitral valve model 1 and the mitral valve model fixing jig 5 are used in a state of being attached to a thoracic cavity simulator, the thoracic cavity simulator will be described first. Fig. 18 shows an image diagram of attachment of the mitral valve model fixing jig to the thoracic cavity simulator. As shown in Fig. 18, a thoracic cavity simulator 8 includes an upper end 81, a lower end 82, a sternum part 83, a spinal part 84, and a rib part 85. In Fig. 18, the thoracic cavity simulator 8 is in the supine position, but in the standing position, an upper end 81 is provided at the upper ends of the sternum part 83 and the spinal part 84, and a lower end 82 is provided at the lower ends. The rib part 85 is fixed to the sternum part 83 and the spinal part 84. Further, a through-hole 86 for attaching an organ model such as the mitral valve model 1 is provided in the lower end 82. As described above, the thoracic cavity simulator 8 has a shape simulating the chest of the human body.

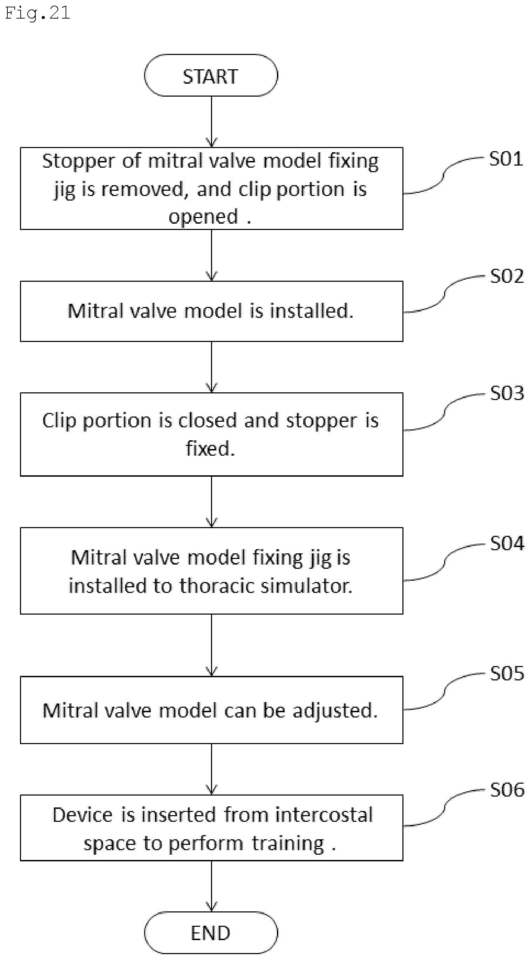

A specific procedure for attaching the mitral valve model 1 and the mitral valve model fixing jig 5 to the thoracic cavity simulator 8 and performing the training of the procedure will be described. Fig. 21 shows a usage flow chart of the mitral valve model and the mitral valve model fixing jig. As shown in Fig. 21, first, the stopper 74 of the mitral valve model fixing jig 5 is removed, and the clip portion 73 is opened (step S01). The through-hole 42 provided in the mitral valve model 1 is fitted and attached to the protrusion 73a provided in the clip portion 73 (step S02). The clip portion 73 is closed, the stopper 74 is fastened, and the clip portion 73 and the slide portion 72 are fixed (step S03).

Next, as shown in Fig. 18, the mitral valve model fixing jig 5 to which the mitral valve model 1 is attached is inserted from the through-hole 86 provided in the lower end 82 of the thoracic cavity simulator 8 in the direction indicated by arrow 9g, and the mitral valve model fixing jig 5 is attached to the spinal part 84 (step S04). A convex engaging part (not shown) is provided on the upper end 81 side of the spinal part 84, and the convex engaging part engages with the concave engaging part 62 provided on the pedestal part 6. Further, a concave engaging part (not shown) is provided on the lower end 82 side of the spinal part 84, and the concave engaging part engages with the convex engaging part 63 provided on the pedestal part 6.

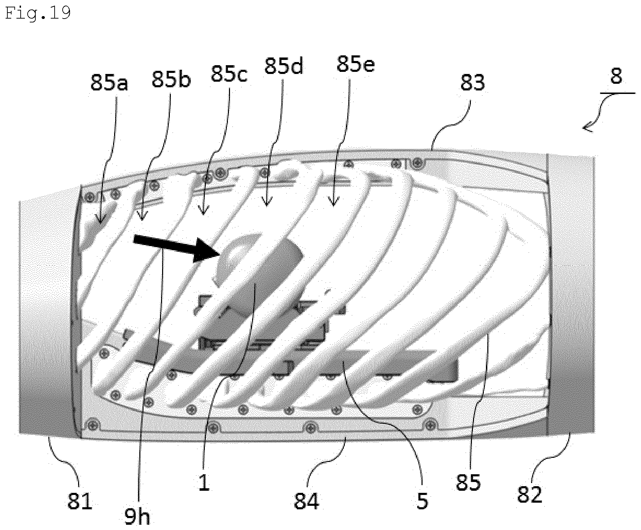

Fig. 19 is an explanatory view when the mitral valve model fixing jig is attached to the thoracic cavity simulator, and shows a state in which the thoracic cavity simulator 8 is viewed from the right side. As shown in Fig. 19, in the rib part 85, a space is formed between the ribs, such as a first intercostal space 85a, a second intercostal space 85b, a third intercostal space 85c, a fourth intercostal space 85d, or a fifth intercostal space 85e. Generally, when approaching the mitral valve from the right side of the patient's body, an endoscope (not shown) is inserted from the fourth intercostal space 85d as indicated by arrow 9h to perform surgery. However, since the feeling regarding the surgical field of view when the endoscope is inserted from the fourth intercostal space 85d differs slightly depending on the operator, it is desirable to fix the mitral valve model 1 at a position that meets the needs of the operator. Therefore, after attaching the mitral valve model fixing jig 5 to the thoracic cavity simulator 8, the position of the mitral valve model 1 can be adjusted by sliding the slide portion 72 (step S05).

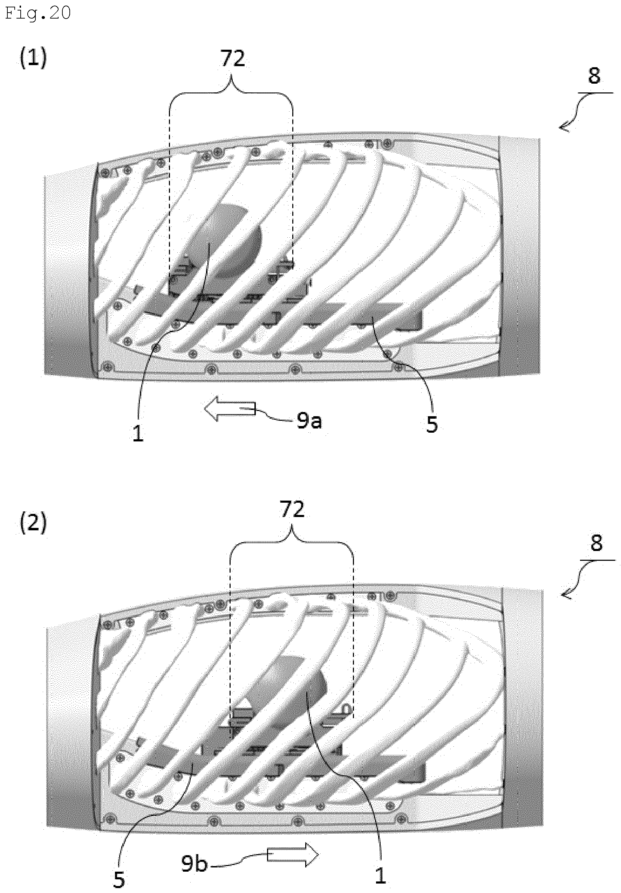

FIG. 20 is an explanatory view of the slide mechanism of the mitral valve model fixing jig, Fig. 20(1) shows a view in which the thoracic cavity simulator is slid upward, and Fig. 20(2) shows a view in which the thoracic cavity simulator is slid downward. As shown in Fig. 20(1), with the mitral valve model fixing jig 5 attached to the thoracic cavity simulator 8, the slide portion 72 is slid 25 mm in the direction of arrow 9a, that is, in the upward direction of the thoracic cavity simulator 8. Further, as shown in Fig. 20(2), with the mitral valve model fixing jig 5 attached to the thoracic cavity simulator 8, the slide portion 72 is slid 25 mm in the direction of the arrow 9b, that is, in the downward direction of the thoracic cavity simulator 8. As shown in Fig. 9(2) or the like, when the slide portion 72 is slid, the button 72a is pressed and the fixed state of the support portion 71 and the slide portion 72 is released. When the pressed state of the button 72a is released at an arbitrary position, the support portion 71 and the slide portion 72 are fixed again. Therefore, it is possible to finely adjust the position of the mitral valve model 1 according to the feeling of the operator.

After adjusting the position of the mitral valve model 1, a device such as an endoscope is inserted from the intercostal space to perform training (step S06). The position of the mitral valve model 1 can be easily adjusted by an operator or an assistant inserting a hand through the through-hole 86 provided in the lower end 82 of the thoracic cavity simulator 8 and operating the button 72a. Therefore, the position can be adjusted during the surgical training.

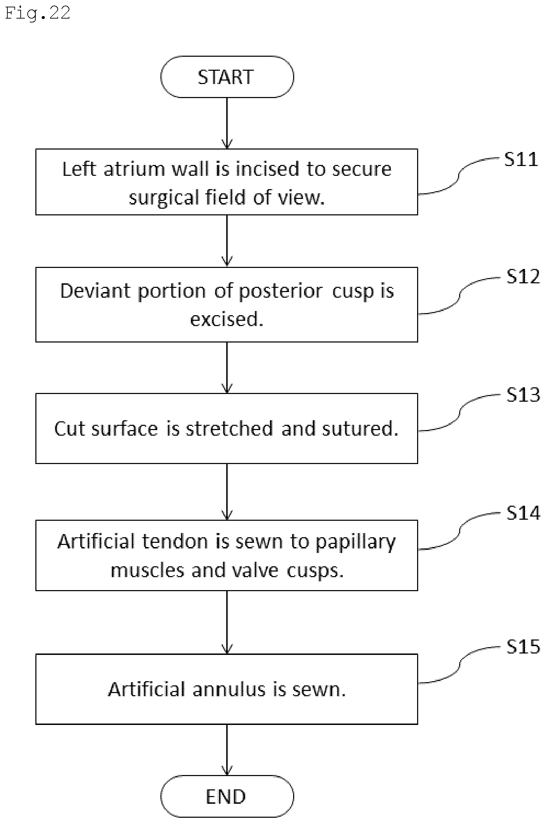

The surgical training can be performed similarly to that of actual mitral valvuloplasty or mitral valve replacement. Fig. 22 shows a flow chart of the surgical training of mitral valvuloplasty. In the case of mitral valvuloplasty approaching from the right side of the patient's body, the left atrium wall 2a is incised to secure the surgical field of view as shown in Fig. 5(2) (step S11). Since the space inside the left atrium part 2 is provided widely in advance, it is not necessary to further thread the left atrium wall 2a in an incised state to secure the surgical field of view.

Next, the deviant portion of the posterior cusp 3b is excised (step S12). The cut surface is stretched and sutured (step S13). For ruptured tendon, artificial tendon (not shown) is sewn to the papillary muscles and valve cusps (step S14). An artificial annulus (not shown) is sewn on the annulus (step S15).

### (Other embodiments)

(1) A lesion may be formed in the anterior cusp 3a of the mitral valve part 3 for training of the procedure for connecting the anterior cusp 3a and the papillary muscles (41a, 41b) by an artificial tendon. In such a case, a material containing fibers may be used as the material of the papillary muscles (41a, 41b) or the material of the entire left ventricle part 4 to increase the strength.
(2) With the mitral valve model fixing jig 5 fixed to the thoracic cavity simulator 8, the fixing part 7 may be rotatable in the horizontal direction and toward the head side so that the orientation of the attached mitral valve model 1 can be adjusted.

### [Industrial Applicability]

The present invention is useful for training of procedures such as mitral valvuloplasty and mitral valve replacement. The present invention is useful not only for complete endoscopic surgery using a surgery support robot, but also for training of the procedure for minimally invasive surgery such as MICS.

### [Description of Symbols]

- 1: Mitral valve model
- 2: Left atrium part
- 2a: Left atrium wall
- 3: Mitral valve part
- 3a: Anterior cusp
- 3b: Posterior cusp
- 3c: Annulus
- 4: Left ventricular portion
- 4a: Left ventricular wall
- 5: Mitral valve model fixing jig
- 6: Pedestal part
- 7: Fixing part
- 8: Thoracic cavity simulator
- 9a ~ 9h: Arrow
- 21: Left atrial appendage
- 41a, 41b: Papillary muscle
- 42, 86: Through-hole
- 61: Recess
- 62: Concave engaging part
- 63: Convex engaging part
- 71: Support portion
- 72: Slide portion
- 72a: Button
- 73: Clip portion
- 73a: Protrusion
- 74: Stopper
- 75: Hinge portion
- 76: Wall portion
- 81: Upper end
- 82: Lower end
- 83: Sternum part
- 84: Spinal part
- 85: Rib part
- 85a: First intercostal space
- 85b: Second intercostal space
- 85c: Third intercostal space
- 85d: Fourth intercostal space
- 85e: Fifth intercostal space
- P: Distance

## Claims

1. A mitral valve model for training of an endoscopic procedure in mitral valvuloplasty or mitral valve replacement, the mitral valve model being obtained by reproducing or deforming an organ texture of a heart, the mitral valve model comprising: a left atrium part, a mitral valve part, and a left ventricle part, wherein the mitral valve part is not visible outside the mitral valve model and is covered by the left atrium part.

2. The mitral valve model according to claim 1, wherein the left atrium part and the left ventricle part are both hollow and are in at least any one of the following states (1) to (3):
(1) a valve cusp provided to the mitral valve part is in a deviant state;
(2) a tendon connecting the valve cusp provided to the mitral valve part and a tip of a papillary muscle provided to the left ventricle part are in a rupture state; and
(3) a distance between the valve cusp provided to the mitral valve part and the tip of the papillary muscle is 3 to 7 mm.

3. The mitral valve model according to claim 1 or 2, wherein a surface layer of the left atrium part is obtained by reproducing or deforming a hardness or thickness of a heart, and the surface layer can be grasped and incised by a device used in the endoscopic procedure.

4. The mitral valve model according to any one of claims 1 to 3, wherein a shape of the left atrium part is a substantially spherical segment shape that is deformed based on a scope image in an actual endoscopic procedure.

5. The mitral valve model according to any one of claims 1 to 4, wherein the organ texture is deformed such that a material constituting the left atrium part contains bubbles.

6. The mitral valve model according to any one of claims 1 to 4, wherein the organ texture is deformed such that a material constituting the left ventricle part does not contain bubbles or fibers.

7. The mitral valve model according to any one of claims 1 to 6, wherein an attachment mechanism is provided below the left ventricle part for attaching a fixing jig for fixing an organ to the thoracic cavity simulator.

8. A mitral valve model fixing jig for attaching and fixing the mitral valve model according to claim 7, comprising:
a pedestal part provided with an attachment mechanism for engaging with a spinal region inside a thoracic cavity simulator, and
a fixing part for fixing the mitral valve model,
wherein the fixing part includes a mechanism capable of adjusting a position of the pedestal part by allowing the spinal region to slide in a longitudinal direction thereof from a position at which the pedestal part is slid onto the spinal region and fixed in a state where the mitral valve model is attached and fixed.

9. The mitral valve model fixing jig according to claim 8, wherein the fixing part includes a rotary table mechanism capable of adjusting an outward direction of a front of the left atrium part of the mitral valve model between a longitudinal direction of the spinal region toward a head and a direction orthogonal to the longitudinal direction, the orthogonal direction being on a right-hand side from a center of the thoracic cavity simulator.
